Europäisches Patentamt

European Patent Office

Office européen des brevets

(11) Numéro de publication: **0 208 820**
**A1**

## (12) DEMANDE DE BREVET EUROPEEN

(21) Numéro de dépôt: 85810333.6

(22) Date de dépôt: 19.07.85

(51) Int. Cl.⁴: **G01L 7/08**

(43) Date de publication de la demande:
21.01.87 Bulletin 87/04

(84) Etats contractants désignés:
CH DE FR GB IT LI

(71) Demandeur: **Charles Gorgé S.A.**
**10, rue de la Condemine**
**CH-2740 Moutier(CH)**

(72) Inventeur: **Gorge, André**
**20, rue de la Condemine**
**CH-2740 Moutier(CH)**

(74) Mandataire: **Tordion, Serge**
**c/o ASUAG-SSIH Département brevets et**
**licences Faubourg du Lac 6**
**CH-2501 Bienne(CH)**

(54) **Manomètre à capsule fermée par une membrane élastique.**

(57) La manomètre à capsule (7, 8) comprend, entre cette dernière et l'aiguille indicatrice (9), une liaison cinématique qui est composée exclusivement de trois paires d'engrenages: la première, qui est constituée par un tigeron (16), qui est en contact avec le point central de la membrane (8) et dont une portée rainurée (17) forme crémaillère, et par un pignon dont l'arbre (20) est parallèle à la capsule (7, 8), la seconde, qui est constituée par les roues (24, 25) à denture conique, et la troisième, qui est constituée par un secteur denté (27), solidaire de la roue - (25), et par un pignon (28), solidaire de l'arbre (10) portant l'aiguille indicatrice (9). Un ressort-spiral (29), inséré avec préarmage entre l'arbre (10) de l'aiguille (9) et un plot fixe (30), maintient le tigeron (16) en contact permanent avec la membrane (8) et rattrappe les ébats des différents engrenages. Grâce à la liaison cinématique assurée par les trois dites paires d'engrenages, le rapport entre les déplacements axiaux de la crémaillère (16, 17) et les angles de rotation de l'aiguille (9) est rigoureusement linéaire. Comme d'autre part les déplacements du point central de la membrane (8) sont directement proportionnels à la pression régnant dans la capsule (7, 8), les divisions du cadran (13) qui correspondent à ces différentes pressions sont strictement équidistantes.

FIG. 1

## MANOMETRE A CAPSULE FERMEE PAR UNE MEMBRANE ELASTIQUE

Dans les manomètres conformes au préambule de la revendication 1, qui sont en vente sur le marché, le mécanisme qui transmet les fléchissements de la membrane élastique à l'aiguille indicatrice comprend au moins un levier en contact permanent avec la dite membrane.

Or, lorsque la membrane fléchit pendant une mesure, l'extrémité du levier en contact avec elle parcourt un arc de cercle autour du point de pivotement du levier. De plus, cette extrémité glisse sur la membrane en s'écartant plus ou moins du dôme central de celle-ci. Il s'ensuit que les angles de rotation de l'aiguille indicatrice ne sont pas rigoureusement proportionnels aux fléchissements de la membrane. Comme ces fléchissements sont, de leur côté, proportionnels aux pressions mesurées, dans la plage de celles pour lesquelles le manomètre est construit, les angles de rotation de l'aiguille indicatrice ne sont donc pas proportionnels aux pressions mesurées.

Ce défaut de linéarité a le gros inconvénient d'obliger le fabricant d'une série de manomètres de ce type à en étalonner les cadrans chacun pour soi. Le glissement du levier sur la membrane de la capsule, lors des mesures, a aussi l'inconvénient de produire une usure qui, à la longue, fausse les indications du manomètre.

Le manomètre du type considéré, qui présente en outre les caractéristiques de la revendication 1, est exempt des défauts indiqués ci-dessus.

Une forme d'exécution du manomètre selon l'invention est représentée schématiquement et à simple titre d'exemple au dessin dans lequel:

la Fig. 1 en est une vue en élévation, avec certaines parties en coupe;

la Fig. 2 est une vue de dessous à plus grande échelle d'une partie de la Fig. 1;

la Fig. 3 est une coupe selon la ligne brisée III-III de la Fig. 2, et

la Fig. 4 est un diagramme illustrant le fonctionnement de ce manomètre.

Le manomètre représenté est enfermé dans un boîtier 1 en forme de calotte cylindrique. Ses organes sont tenus par un bâti délimité par deux platines 2, 3, reliées entre elles par des piliers 4. Ce bâti est fixé au boîtier 1 par un plot fileté 5 vissé dans un trou central taraudé 6 du fond du boîtier 1.

La capsule du manomètre, constituée par une calotte 7 de faible hauteur, fermée par une membrane élastique ondulée 8, est fixée contre la face interne de la platine 2. L'intérieur de cette capsule peut être mis en communication à travers une ouverture axiale du plot 5 et un conduit non représenté avec une enceinte dont on veut mesurer la pression interne.

La lecture de cette pression est assurée par une aiguille indicatrice 9, qui est calée sur un arbre 10 pivoté dans la platine 3 et un pont triangulaire 11 fixé à cette platine par trois piliers 12. L'aiguille 9 se déplace en regard d'un cadran gradué 13. Le boîtier 1 est fermé par un verre 14 retenu en place par une lunette 15, vissée sur le boîtier.

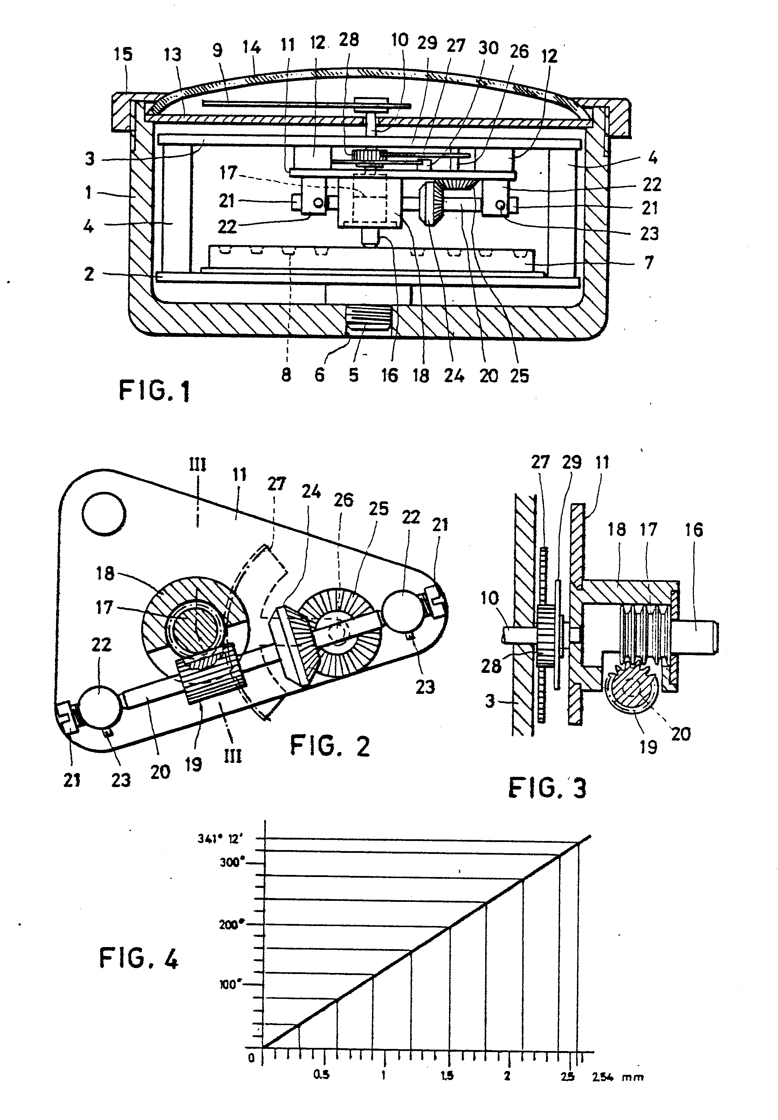

Les fléchissements de la membrane 8 sous l'effet des pressions à mesurer sont transmis à l'aiguille 9 par un mécanisme qui comprend tout d'abord un tigeron 16, dont une portée rainurée 17 est emprisonnée dans une cage cylindrique 18 rivée dans une ouverture du pont 11 (Fig. 3). La portée 17 peut coulisser librement mais sans jeu dans la cage 18. L'emplacement de cette cage est déterminé de façon que le tigeron 16 soit coaxial à la capsule 7, 8 fixée à la platine 2.

La portée rainurée 17 du tigeron 16 fait office de crémaillère. Elle entraîne un pignon 19 solidaire d'un arbre 20 pivoté par ses extrémités coniques dans des vis à cuvette conique 21 engagées dans des plots 22, solidaires de deux des piliers 12 (Fig. 2). Des vis de blocage 23 empêchent des déplacements intempestifs des vis 21.

L'arbre 20 porte également une roue 24 à denture conique, en prise avec une roue similaire 25, calée en porte-à-faux sur un arbre 26 pivoté dans la platine 3 et le pont 11. Pour transmettre les rotations de l'arbre 20 à l'arbre 26, n'importe quel engrenage d'angle pourrait être utilisé. Par exemple la roue 24 pourrait être remplacée par une roue à denture de champ qui engrènerait avec une roue à denture de front montée en lieu et place de la roue 25. Entre les deux éléments de bâti 3 et 11, l'arbre 26 porte un secteur denté 27 en prise avec un pignon 28 calé sur l'arbre 10 portant l'aiguille 9. Un ressort-spiral 29 est inséré avec un certain préarmage entre l'arbre 10 et un piton 30 planté dans le pont 11. Ce ressort-spiral a pour effect de maintenir l'extrémité inférieure du tigeron 16 en contact permanent avec le point central de la membrane 8, tout en rattrapant les ébats des différents engrenages décrits.

Il résulte de la description précédente que la liaison cinématique entre la membrane 8 et l'aiguille 9 est assurée exclusivement par les engrenages 17-19, 24-25 et 27-28. Ces derniers ont pour effet de garantir la linéarité du rapport entre les fléchissements de la membrane 8 et les angle de rotation de l'aiguille 9. Cette linéarité est illustrée par le diagramme de la Fig. 4, dans lequel les déplacements en millimètres du tigeron 16 ont été reportés en abscisses et les déplacements angulaires en degrés de l'aiguille 9 en ordonnées. Comme les déplacements du centre de la membrane 8 et par conséquent du tigeron 16 sont rigoureusement proportionnels aux pressions régnant dans la capsule 7, 8 du manomètre dans la plage des pressions que ce dernier est destiné à mesurer, il s'ensuit que les graduations du cadran, correspondant aux pressions dans la capsule 7, 8 sont équidistantes. Les cadrans des manomètres d'une série de fabrication peuvent ainsi être gradués à l'avance de façon identique.

Les manomètres selon l'invention peuvent servir à différents usages. C'est toutefois plus particulièrement à la mesure de la pression sanguine qu'ils sont destinés.

### Revendications

1. Manomètre à capsule fermée par une membrane élastique, comprenant une aiguille indicatrice à laquelle un mécanisme transmet les mouvements de la membrane,

caractérisé

en ce que la liaison cinématique réalisée par le dit mécanisme entre la dite membrane et la dite aiguille est assurée exclusivement par des engrenages (17-19, 24-25 et 27-28) qui transmettent les fléchissements de la membrane (8) à l'aiguille indicatrice (9) de façon rigoureusement proportionnelle.

2. Manomètre selon la revendication 1, dans lequel la dite capsule est logée au fond d'un bâti dont la face est recouverte d'un cadran en regard duquel se déplace l'aiguille indicatrice,

caractérisé

en ce que le dit mécanisme comprend une crémaillère (17) en contact permanent avec le point central de la dite membrane (8), cette crémaillère se déplaçant perpendiculairement au cadran (13), en entraînant un pignon (19) d'axe (20) parallèle au cadran (13), qui entraîne à son tour un pignon (28) solidaire de l'arbre (10) portant l'aiguille indicatrice (9) par l'intermédiaire d'un engrenage d'angle (24, 25) et d'un secteur denté (27).

3. Manomètre selon la revendication 2,

caractérisé

en ce que la crémaillère (17) est maintenue en contact permanent avec la membrane (8) par un ressort spiral (29) qui est inséré avec préarmage entre l'arbre (10) portant l'aiguille indicatrice (9) et un élément de bâti (30) et qui rattrape en même temps les ébats des engrenages (17-19, 24-25, 27-28).

FIG. 1

FIG. 2

FIG. 3

FIG. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-4 107 996 (A.J. HOLLINGSWORTH et al.) * figures 2, 6; colonnes 3, 4 * | 1-3 | G 01 L 7/08 |
| X | DE-B-2 812 755 (B. SPEIDEL) * figure 3; revendications * | 1 | |
| X | US-A-4 245 508 (J.H. ANDRESEN, JR.) * figure 3b; tout le texte * | 1 | |
| A | US-A-4 050 314 (F. LONGHETTO) | 1,2 | |
| A | FR-A-2 257 079 (SOCIETE COMMERCIALE CHAUVIN ARNOUX) | | |
| A | US-A-3 110 284 (D.E. NAPIER) | | |

DOMAINES TECHNIQUES
RECHERCHES (Int. Cl.4)

G 01 L 7/08
G 01 L 7/10

Le présent rapport de recherche a été établi pour toutes les revendications

| Lieu de la recherche | Date d'achèvement de la recherche | Examinateur |
|---|---|---|
| BERLIN | 17-09-1986 | KOEHN G |